# EUROPEAN PATENT APPLICATION

(11) **EP 1 796 349 A1**
(43) Date of publication of application: **13.06.2007**
(21) Application number: 05425870.2
(22) Date of filing: 07.12.2005
(51) Int. Cl.: H04M 1/02, G06F 1/16

(54) **Electronic device including two sliding housings and an internal display**

(71) Applicant: MOTOROLA, INC., Schaumburg, IL 60196 (US)
(72) Inventor: Pinna, Claudia c/o Motorola Electronics SPA, 10147 Turin (IT); Monelli, Paolo c/o Motorola Electronics SPA, 10147 Turin (IT); Giocosa Fausto c/o Motorola Electronics SPA, 10147 Turin (IT)
(74) Representative: Cross, Rupert Edward Blount

(57) **Abstract**

An electronic device (100) has a first external housing (102), a second external housing (104), and an internal housing (106). The first external housing and the second external housing slide over at least a part of the internal housing, thereby enabling the opening and closing of the electronic device.
The internal housing (106) further comprises a display which is exposed when the first and second external housing are in an open position.
The display is additionally movable between a first and a second position.

## Description

### FIELD OF THE PRESENT INVENTION

This invention relates in general, to electronic devices, and more specifically, to displays in mobile phones.

### BACKGROUND OF THE PRESENT INVENTION

With an increasing use of mobile phones for advanced features such as Internet access, video calls, and electronic games, there has been an increased demand for better displays on mobile phones. The size of a mobile phone, however, increases with an increase in the size of the display. Moreover, a large display screen in a mobile phone is vulnerable to damage, owing to its size and fragility.

Some mobile phones with a hinge, such as 'clam shell' phones, have a display on the inner side of the mobile phone. They use a plastic housing to protect the display. This plastic housing covers the display when the mobile phone is not being used. When the plastic housing is opened, the display is visible, and the mobile phone can be operated.

### BRIEF DESCRIPTION OF THE DRAWINGS

Various embodiments will hereinafter be described in conjunction with the appended drawings, provided to illustrate and not to limit the invention, wherein like designations denote like elements, and in which:
FIG. 1 shows an electronic device in a first position, in accordance with an embodiment;
FIG. 2 shows the electronic device in a second position, in accordance with an embodiment;
FIG. 3 shows a front view of the electronic device shown in FIG. 1 in a closed position, in accordance with an embodiment;
FIG. 4 shows a back view of the electronic device shown in FIG. 1 in the closed position, in accordance with an embodiment;
FIG. 5 shows a first view of an actuator button mechanism in cross section, in accordance with an embodiment;
FIG. 6 shows a second view of the actuator button mechanism in cross section, in accordance with an embodiment;
FIG. 7 shows a third view of the actuator button mechanism in cross section, in accordance with an embodiment;
FIG. 8 shows a partial cut away view of a first mechanism, used for opening and closing the electronic device shown in FIG. 1, in the closed position of the electronic device, in accordance with an embodiment;
FIG. 9 shows a cross section view of the first mechanism, used for opening and closing the electronic device shown in FIG. 1, in the closed position of the electronic device, in accordance with an embodiment;
FIG. 10 shows a partial cut away view of the first mechanism, used for closing and opening the electronic device shown in FIG. 1, in an open position of the electronic device, in accordance with another embodiment;
FIG. 11 shows a partial cut away view details of the first mechanism, used for closing and opening the electronic device shown in FIG. 1, in an open position of the electronic device, in accordance with another embodiment;
FIG. 12 shows a first view of a second mechanism used for moving an internal display in the electronic device shown in FIG. 1, in accordance with an embodiment;
FIG. 13 shows a second view of the second mechanism used for moving the internal display in the electronic device shown in FIG. 1, in accordance with an embodiment;
FIG. 14 shows a third view of the second mechanism used for moving the internal display in the electronic device shown in FIG. 1, in accordance with an embodiment; and
FIG. 15 shows a fourth view of the second mechanism used for moving the internal display in the electronic device shown in FIG. 1, in accordance with an embodiment.

### DETAILED DESCRIPTION OF THE EMBODIMENTS

An electronic device has an internal housing with an internal display, a first external housing and a second external housing. The first external housing and the second external housing are slideable over at least a part of the internal display of the internal housing. When the electronic device is in a closed position, the first and the second external housings at least partially cover the internal display. Moreover, the first external housing and the second external housing at least partially expose the internal display when the electronic device is in an open position. A first mechanism enables the first and the second external housings to slide over the internal housing, thereby allowing the electronic device to open and close.

Before describing in detail the particular electronic device in accordance with the present invention, it should be observed that the present invention resides primarily in combinations of method steps and apparatus components related to an electronic device with internal display. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

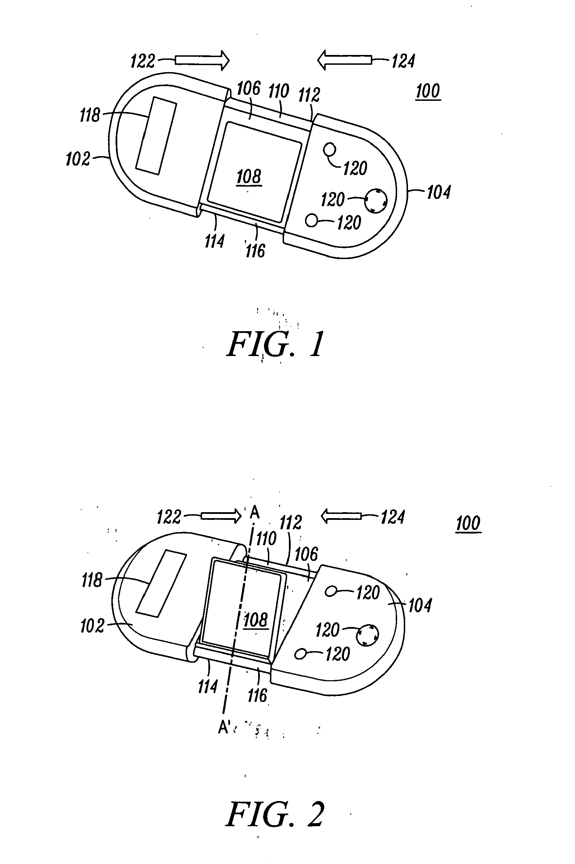

FIG. 1 shows an electronic device100 in a first position, in accordance with an embodiment. The electronic device 100 may be an electronic device such as a mobile phone (shown), or it can be a portable computer, a personal digital assistant, a cordless phone, a remote controller, or any other type of electronic device. The electronic device 100 includes a first external housing 102, a second external housing 104, and an internal housing 106, which has an internal display 108 located on it. The first external housing 102 and the second external housing 104 are slideable over at least a portion of the internal display 108, which is located on the internal housing 106.

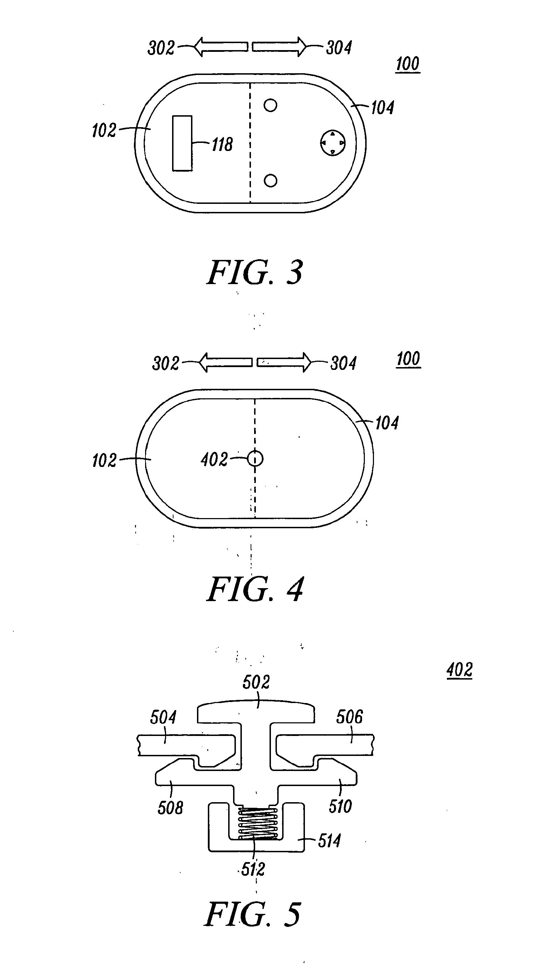

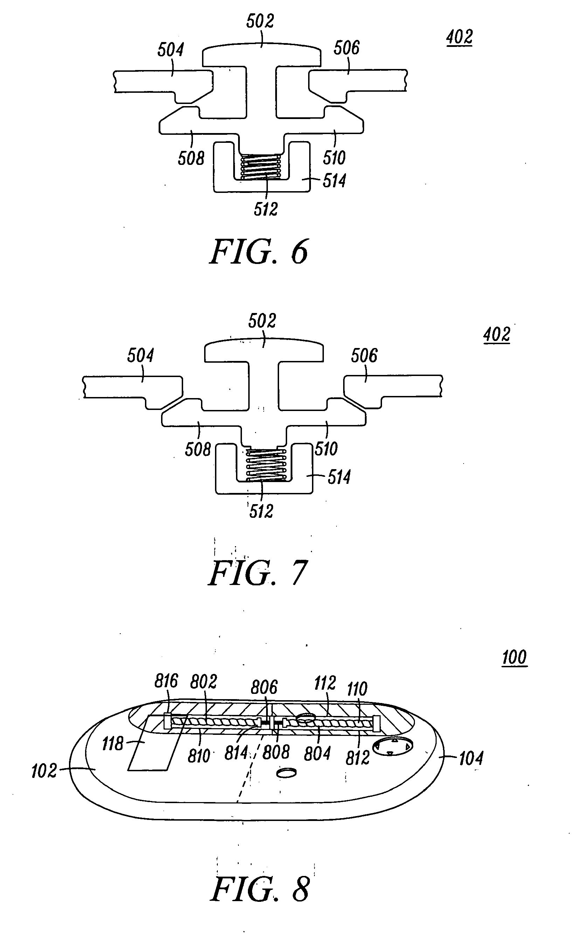

When the first external housing 102 and the second external housing 104 are not in contact with each other, the electronic device 100 is in an open position. In the open position, the internal display 108 is at least partially visible. The electronic device 100 has a fully open position and a range of intermediate open positions. In the fully open position, the first external housing 102 and the second external housing 104 are fully extended and the internal display 108 is completely visible. However, at least a part of the internal display 108 is visible in the intermediate positions of the electronic device 100, which is between the fully open position and a closed position of the electronic device 100 (shown in FIG. 3). The opening and closing of the electronic device 100 is enabled through a first mechanism 110. The first mechanism 110 is described in detail in conjunction with FIGS. 8, 9, 10 and 11. In accordance with an embodiment, the first mechanism 110 is inside a first guide 112. In another embodiment, the first mechanism 110 works in conjunction with a first guide 112 and a second guide 114.

In various embodiments of the present invention, the first position corresponds to the internal display 108 being parallel to the internal housing 106, at about zero degrees to the internal housing 106. In the embodiment shown in FIG. 1, in the first position, the rear of the internal display 108 is completely in contact with the internal housing 106.

The internal display 108 provides a user access to various features of the electronic device 100. Examples of these features may include, but are not limited to, text messages, video messages, address books, games, MP3 players, profiles, images, voice recorders and mail. The movement of the internal display 108 is enabled by a second mechanism 116, through which the internal display 108 is attached to the internal housing 106.

In various embodiments of the present invention, the electronic device 100 also includes an external display 118 and at least one input button 120. The external display 118 may be located on at least one of: the first external housing 102 and the second external housing 104, and is visible to a user when the electronic device 100 is in an open position as well as the closed position. In an embodiment of the invention, the external display 118 can be used to display the phone number from which a call is being made or received by the electronic device 100. In various embodiments of the present invention, the external display 118 may display at least one of a clock, the duration of a call, location information pertaining to the electronic device 100, and any other such information.

The input button 120 may be located on at least one of: the first external housing 102 and the second external housing 104. In various embodiments, the input button 120 is implemented as a keypad, a set of navigational buttons, and/or a joystick or the like - all with or without soft keys.

The block arrows 122 and 124 indicate the direction in which the first external housings 102 and the second external housing 104 move to close the electronic device 100.

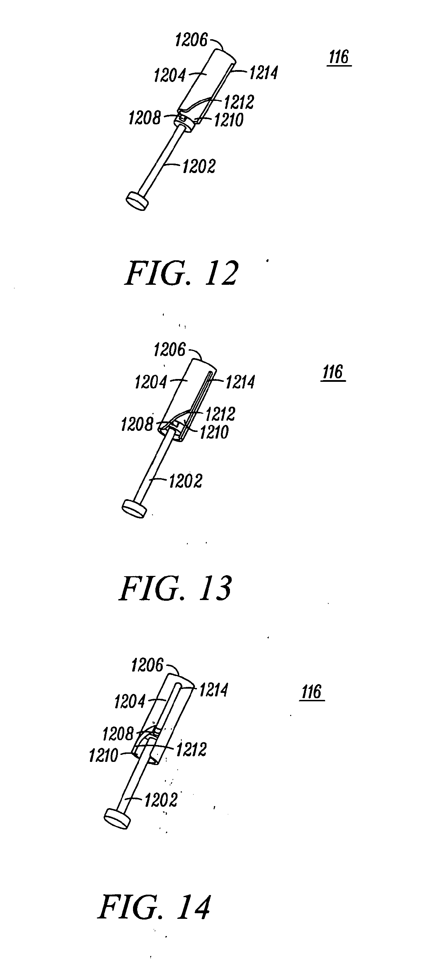

FIG. 2 shows the electronic device 100 in a second position, in accordance with an embodiment. When the electronic device 100 is fully opened, the internal display 108 can be moved from a first position to at least a second position through a range of intermediate positions. In accordance with an embodiment, the second mechanism 116 works in conjunction with the second guide 114. The second mechanism 116 is explained in detail in conjunction with FIG. 12 to FIG. 15.

In various embodiments of the present invention, the second position corresponds to the internal display 108 being at a pre-determined angle, such as at an angle of 45 degrees, relative to the internal housing 106. The second position enables a user to get a better view of the internal display 108. When the internal display 108 moves from the first position to the second position, it goes through intermediate positions, which lie between the angles of the first position and the second position. In an embodiment, a tilt mechanism, which may be a friction hinge, allows the internal display 108 to remain at any angle within a pre-determined range, such as 0 degree through 90+ degrees at which a user places it. In another embodiment, the tilt mechanism settles either at the first position or the second position, and whenever the internal display 108 is in an intermediate position, the tilt mechanism stages the internal display 108 to either the first position as shown in FIG. 1 or the second position as shown in FIG. 2.

In an embodiment, the internal display 108 may be moved manually from the first position as shown in FIG. 1 to the second position as shown in FIG. 2 after the electronic device 100 is opened. The internal display 108 can alternatively or additionally move automatically from the first position to the second position when the electronic device 100 is opened. In various embodiments of the present invention, after the internal display 108 has reached the second position, it can be freely rotated about an axis AA', which is perpendicular to the second mechanism 116. The internal display 108 is in the first position if the electronic device 100 is closed or if the first external housing 102 and the second external housing 104 are partially extended. However, the internal display 108 may have at least one of: the first position, the second position and the intermediate positions when the electronic device 100 is fully opened and the first external housing 102 and the second external housing 104 are fully extended.

FIG. 3 shows a front view of the electronic device 100 shown in FIG. 1 in a closed position, in accordance with an embodiment. The internal housing 106 is fully encompassed by the first external housing 102 and the second external housing 104 when the electronic device 100 is in the closed position. In the closed position of the electronic device 100, the internal display 108 is covered and protected by the first external housing 102 and the second external housing 104 and is not visible to a user of the electronic device 100. In the closed position, the internal display 108 is not visible. In an alternate embodiment, the first external housing 102 and the second external housing 104 may be transparent or translucent, thus allowing visibility of the internal display 108 when the electronic device 100 is in the closed position. The block arrows 302 and 304 indicate the direction in which the electronic device 100 opens.

FIG. 4 shows a back view of the electronic device 100 shown in FIG. 1 in a closed position, in accordance with an embodiment. When the first external housing 102 is in contact with the second external housing 104, the electronic device 100 is in the closed position. In the back-side of the electronic device 100, an actuator button mechanism 402 is placed between the first external housing 102 and the second external housing 104. In an embodiment, when the electronic device 100 is in the closed position, the first external housing 102 is engaged to the second external housing 104 by the actuator button mechanism 402. The actuator button mechanism 402 is pressed to open the electronic device 100 in such a way that at least a part of the internal display 108 is visible. The actuator button mechanism 402 is explained in conjunction with FIG. 5, FIG. 6 and FIG. 7.

FIG. 5 shows a first view of the actuator button mechanism 402 in cross section, in accordance with an embodiment. The actuator button mechanism 402 includes an actuator button 502, a first clip 504 attached to or integral with the first external housing 102 and a second clip 506 attached to or integral with the second external housing 104. The first view of the actuator button mechanism 402 in FIG. 5 corresponds to the closed position of the electronic device 100. The first clip 504 is engaged to a first protrusion 508 of the actuator button 502 and the second clip 506 is engaged to a second protrusion 510 of the actuator button 502. Therefore, the first external housing 102 and the second external housing 104 are interlocked. They are forced to remain in this interlocked position by an actuator spring 512 located in a spring cradle 514.

In an embodiment, a clip is attached to both the first external housing 102 and the second external housing 104. The clips help to engage and disengage the first external housing 102 and the second external housing 104. In the closed position of the electronic device 100, the first external housing 102 is engaged to the second external housing 104 by means of the clip attached to them.

FIG. 6 shows a second view of the actuator button mechanism 402 in cross section, in accordance with an embodiment. The actuator button mechanism 402 in FIG. 6 corresponds to the opening of the electronic device 100. The actuator button 502 is pressed by a user in such a manner that the first clip 504 and the second clip 506 get disengaged from the first protrusion 508 and the second protrusion 510, respectively.

FIG. 7 shows a third view of the actuator button mechanism 402 in cross section, in accordance with an embodiment. In the third view, shown in FIG. 7, the first external housing 102 and the second external housing 104 are forced to open by the first mechanism 110. In addition to this, the actuator button 502 is forced to restore back to a position that corresponds to the first view as shown in FIG. 5 by the actuator spring 512.

FIG. 8 shows a partial cut away view of the first mechanism 110, used for opening and closing the electronic device 100 shown in FIG. 1, in the closed position of the electronic device, in accordance with an embodiment. The first mechanism 110 includes a first internal shaft 802, a second internal shaft 804, a first spring 806 and a second spring 808. The first mechanism 110 is inside the first guide 112, which is cylindrical in shape. The first guide 112 is divided into a first compartment 810 and a second compartment 812, such that, when the electronic device 100 is in the closed position, the first compartment 810 is inside the first external housing 102 and the second compartment 812 is inside the second external housing 104. The first compartment 810 contains the first internal shaft 802 and the first spring 806 such that a first end 814 of the first internal shaft 802 is in contact with the first spring 806 and a second end 816 of the first internal shaft 802 is in contact with the first external housing 102. The second internal shaft 804 and the second spring 808 are similarly arranged inside the second compartment 812 of the first guide 112.

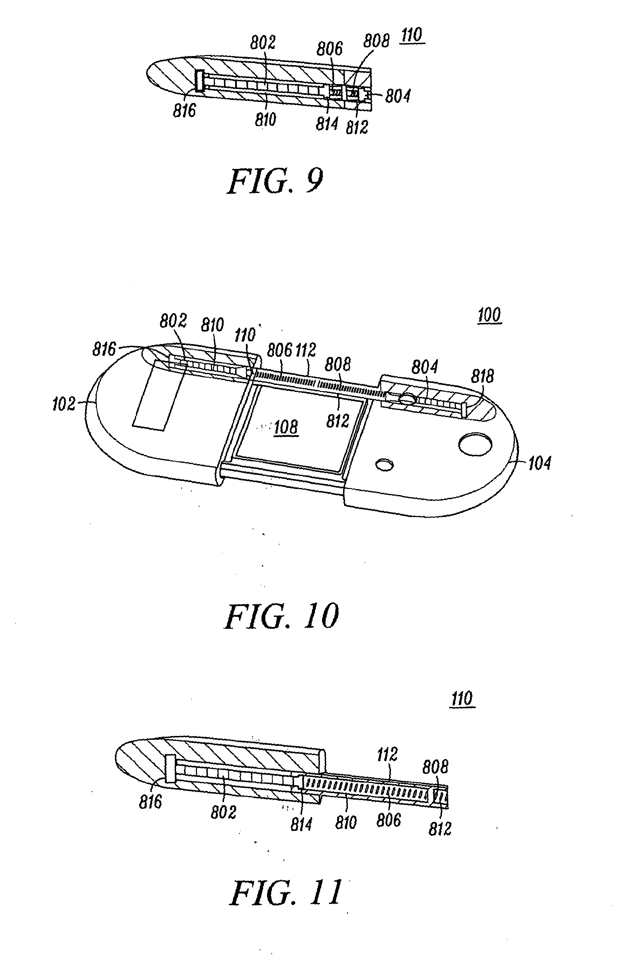

In the closed position of the electronic device 100, the actuator button mechanism 402 keeps the first external housing 102 and the second external housing 104 engaged to each other. Therefore, the springs 406 and 408 are compressed inside the first compartment 810 and the second compartment 812, respectively. The actuator button 502 is then pressed to open the electronic device 100. The first mechanism 110 in the open position of the electronic device 100 is shown in FIG. 10.

FIG. 9 shows a cross section view of the first mechanism 110, used for opening and closing the electronic device 100 shown in FIG. 1, in the closed position of the electronic device 100, in accordance with an embodiment. An enlarged view of a portion of the first mechanism 110 in the closed position of the electronic device 100 is shown.

FIG. 10 shows a partial cut away view of the first mechanism 110, used for closing and opening the electronic device 100 shown in FIG. 1, in an open position of the electronic device 100, in accordance with another embodiment, is shown. An enlarged view of the first mechanism 110, in the open position of the electronic device 100. In an embodiment, the actuator button 502 is pressed to open the electronic device 100. The first external housing 102 and the second external housing 104 disengage from the actuator button 502 when it is pressed. As a result, the first spring 806 inside the first compartment 810 starts expanding. The first spring 806 pushes against the first internal shaft 802 connected to it. Further, the first internal shaft 802 connected to the first external housing 102 pushes the first external housing 102 towards an open position. Similarly, the second spring 808 inside the second compartment 812 starts expanding and pushes open the second external housing 104 simultaneously with the first external housing 102. The internal shafts 802 and 804 are provided with a stopper (not shown in FIGS. 8 and 10). The stopper enables the first external housing 102 and the second external housing 104 to gradually achieve the fully opened position of the electronic device 100.

In the fully opened position of the electronic device 100, the first external housing 102 and the second external housing 104 are fully extended and the first spring 806 and the second spring 808 are expanded to a maximum state allowed by the designer. The internal shafts 802 and 804 have a shape such that the translation of the first external housing 102 and the second external housing 104 is stopped when the intended fully open position is achieved. After the electronic device 100 is opened and the first external housing 102 and the second external housing 104 are fully extended, the internal display 108 can be rotated using the second mechanism 116.

FIG. 11 shows a partial cut away view with details of the first mechanism 110, used for closing and opening the electronic device 100 shown in FIG. 1, in an open position of the electronic device 100, in accordance with another embodiment of the present. An enlarged view of a portion of the first mechanism 110 in the open position of the electronic device 100 is shown

FIG. 12 shows a first view of a second mechanism 116 used for moving an internal display 108 in the electronic device 100 shown in FIG. 1, in accordance with an embodiment. The second mechanism 116 automatically ensures that the internal display 108 is in the first position as shown in FIG. 1 before the device 100 fully closes. This second mechanism 116 helps prevent damage to the internal display 108 that might be caused by trying to close the device 100 when the display 108 is in the second position shown in FIG. 2 or intermediate positions. The second mechanism 116 is contained in the second guide 114 (shown in FIG. 1). The second mechanism 116 includes a follower shaft 1202 and a cam 1204. The first view details shown in FIG. 12 shows the second mechanism 116 when a user starts closing the electronic device 100 and moves the first external housing 102 and the second external housing 104 toward each other. The internal display 108 is in at least one of: the first position and the second position as shown in FIG. 1 and FIG. 2, respectively. The follower shaft 1202 is moved towards the cam 1204 and a follower tab 1208 on the follower shaft 1202 is brought in contact with an open end 1210 of the cam 1204. The open end 1210 of the cam 1204 has a slant opening 1212, which narrows down to form a slit 1214 in the cam 1204. The slit 1214 runs towards a closed end 1206 of the cam 1204. The closed end 1206 of the cam 1204 is attached to the internal display 108. Therefore, when the cam 1204 rotates, the internal display 108 rotates with it.

FIG. 13 shows second view of the second mechanism 116 used for moving the internal display in the electronic device 100 shown in FIG. 1, in accordance with an embodiment. The follower tab 1208 translates on the slant opening 1212 of the cam 1204 when the electronic device 100 is closed. As the follower tab 1208 translates on the slant opening 1212 of the cam 1204, the follower tab 1208 rotates the cam 1204 and the follower shaft 1202 moves inside the cam 1204. Because the cam 1204 is attached to the internal display 108 through its closed end 1206, the internal display 1208 also starts moving to close the electronic device 100 and at least partially cover the internal display 108. The follower tab 1208 starts translating the slit 1214 of the cam 1204 and starts moving toward the first position.

FIG. 14 shows a third view of the second mechanism 116 used for moving the internal display in the electronic device 100 shown in FIG. 1, in accordance with an embodiment. The third view corresponds to the internal display 108, being in the first position. In the third view the follower tab 1208 has completely translated the slant opening 1212 of the cam 1204 and has reached the slit 1214 of the cam 1204. In addition to (or because of) this, the internal display 108 has moved to the first position. After the position as shown in the third view in FIG. 14 has been achieved, the first external housing 102 and the second external housing 104 are moved toward each other to at least partially cover the internal display 108.

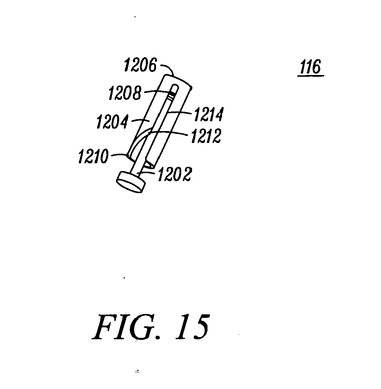

FIG. 15 shows a fourth view of the second mechanism 116 used for moving the internal display in the electronic device 100 shown in FIG. 1, in accordance with an embodiment. The fourth view corresponds to the closed position of the electronic device 100. In the closed position, the follower tab 1208 has completely translated the slit 1214 of the cam 1204 and has reached the closed end 1206. In an embodiment, the follower shaft 1202 is inside the cam 1204 as much as possible as shown in the fourth view shown in FIG. 15, where the electronic device 100 is in a closed position as shown in FIG. 3, and FIG. 4. The first external housing 102 and the second external housing 104 are in contact with each other and the internal display 108 is completely encompassed by them.

In another embodiment, the second mechanism 116 is a hinge assembly and the user manually returns the internal display 108 to the first position before closing the external housings 102 and 104 of the electronic device 100.

Various embodiments of the present invention provide an electronic device 100, in which the assembly of the first external housing 102, the second external housing 104, and the internal housing 106 with the internal display 108 enable the electronic device 100 to be compact in size when the electronic device 100 is in a closed position. When the electronic device 100 is closed, the first external housing 102 and the second external housing 104 protect the internal display 108 from dust, oil, force, and other types of damage.

In this document, relational terms such as first and second, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

In the foregoing specification, the invention and its benefits and advantages have been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

## Claims

1. An electronic device comprising:
an internal housing;
a first external housing, slideable over at least a part of the internal housing; and
a second external housing, slideable over at least a part of the internal housing.

2. The electronic device according to claim 1 further comprising a first mechanism, enabling the first external housing and the second external housing to at least partially cover the internal housing when the electronic device is in a closed position and at least partially uncover the internal housing when the electronic device is in an open position.

3. The electronic device according to claim 2, wherein the first mechanism comprises:
at least one spring; and
at least one shaft, connected to the at least one spring through a first end, the at least one shaft being connected to at least one of the first external housing and the second external housing through a second end.

4. The electronic device according to claim 3 further comprising an actuator button mechanism for keeping the electronic device in a closed position, the actuator button mechanism initiating the first mechanism.

5. The electronic device according to claim 2 further comprising an internal display located on the internal housing, the internal display being hidden in the closed position.

6. The electronic device according to claim 2 further comprising an internal display located on the internal housing, the internal display being visible in the open position.

7. The electronic device according to claim 6 further comprising a second mechanism for moving the internal display between a first position and a second position.

8. The electronic device according to claim 7, wherein the second mechanism comprises:
a follower shaft with a follower tab; and
a second cam, having at least one slant opening and a slit for cooperating with the follower tab.

9. The electronic device according to claim 1 further comprising an external display located on at least one of the first external housing and the second external housing.

10. The electronic device according to claim 9 wherein the external display is visible in a closed position.

11. The electronic device according to claim 9 wherein the external display is visible in an open position.

12. The electronic device according to claim 1 further comprising an input button located on at least one of the first external housing and the second external housing.

13. An electronic device comprising:
a first external housing;
a second external housing;
an internal housing; and
a first mechanism coupling the first external housing and the second external housing to the internal housing, the first mechanism enabling the first external housing and the second external housing to at least partially cover the internal housing when the electronic device is in a closed position and at least partially uncover the internal housing when the electronic device is in an open position.

14. The electronic device according to claim 13, wherein the first external housing and the second external housing are slideable over at least a part of the internal housing.

15. The electronic device according to claim 13, wherein the first mechanism comprises:
at least one spring; and
at least one shaft, having a first end and a second end wherein, the at least one shaft is connected to the at least one spring through the first end and to at least one of the first external housing and the second external housing through the second end.

16. The electronic device according to claim 13 further comprising an actuator button mechanism for enabling opening and closing of the electronic device.

17. The electronic device according to claim 13 further comprising an internal display located on the internal housing, wherein at least a part of the internal display is hidden in the closed position of the electronic device and at least a part of the internal display is visible in the open position of the electronic device.

18. The electronic device according to claim 17 further comprising a second mechanism for moving the internal display between a first position and a second position.

19. The electronic device according to claim 18, wherein the second mechanism comprises:
a follower shaft with a follower tab; and
a cam, having at least one slant opening and at least one slit for cooperating with the follower tab.

20. The electronic device according to claim 13 further comprising an external display located on at least one of the first external housing and the second external housing.

21. The electronic device according to claim 20 wherein the external display is visible in the open position of the electronic device.

22. The electronic device according to claim 20 wherein the external display is visible in the closed position of the electronic device.

23. The electronic device according to claim 13 further comprising an input button located on at least one of the first external housing and the second external housing, the input button being used for providing input to the electronic device.
